# EUROPÄISCHE PATENTSCHRIFT

(11) **EP 4 726 333 B1**
(45) Veröffentlichungstag und Bekanntmachung des Hinweises auf die Patenterteilung: **30.09.2026**
(21) Anmeldenummer: 24205882.4
(22) Anmeldetag: 10.10.2024
(51) Int. Cl.: G01D 5/244, G01B 9/02, G01B 21/04

(54) **VERFAHREN UND VORRICHTUNG ZUR BESTIMMUNG MINDESTENS EINES KORREKTURWERTS FÜR EINEN ZU KORRIGIERENDEN IST-PHASENWERT SOWIE ZUR BESTIMMUNG EINES RESULTIERENDEN PHASENWERTS**
METHOD AND DEVICE FOR DETERMINING AT LEAST ONE CORRECTION VALUE FOR AN ACTUAL PHASE VALUE TO BE CORRECTED AND FOR DETERMINING A RESULTING PHASE VALUE
PROCÉDÉ ET DISPOSITIF DE DÉTERMINATION D'AU MOINS UNE VALEUR DE CORRECTION POUR UNE VALEUR DE PHASE RÉELLE À CORRIGER ET DE DÉTERMINATION D'UNE VALEUR DE PHASE RÉSULTANT

(43) Veröffentlichungstag der Anmeldung: 15.04.2026
(73) Patentinhaber: Fraunhofer-Gesellschaft zur Förderung der angewandten Forschung e.V., 80686 München (DE)
(72) Erfinder: Dr. Schwemmer, Christian, 91230 Happurg (DE); Dr. Roßkopf, Andreas, 90480 Nürnberg (DE); Dr. Erdmann, Andreas, 91052 Erlangen (DE)
(74) Vertreter: Ramrath, Lukas

(56) Entgegenhaltungen:
- DE-A1- 102020 123 482
- DE-T5- 112015 001 715
- JP-A- 2017 151 061
- US-B2- 7 292 347
- HEYDEMANN P L M: "Determination and correction of quadrature fringe measurement errors in interferometers", APPLIED OPTICS, OPTICAL SOCIETY OF AMERICA, WASHINGTON, DC, US, vol. 20, no. 19, 1 October 1981 (1981-10-01), pages 3382 - 3384, XP002519626, ISSN: 0003-6935, DOI: 10.1364/AO.20.003382

## Beschreibung

Die Erfindung betrifft ein Verfahren und eine Vorrichtung zur Bestimmung mindestens eines Korrekturwerts für einen zu korrigierenden Ist-Phasenwert sowie zur Bestimmung eines resultierenden Phasenwerts.

Positions- oder Abstandssensoren, insbesondere interferometrie- oder encoderbasierte Sensoren, erzeugen Ausgangssignale basierend auf dem sogenannten Quadraturverfahren, welches z.B. in der US5,631,736 A aber auch in dem Dokument "J. Watchi, S. Cooper, B. Ding, C. M. Mow-Lowry, and C. Collette, Contributed Review: A review of compact interferometers, Review of Scientific Instruments 89 (12), 121501 (2018)" beschrieben ist.

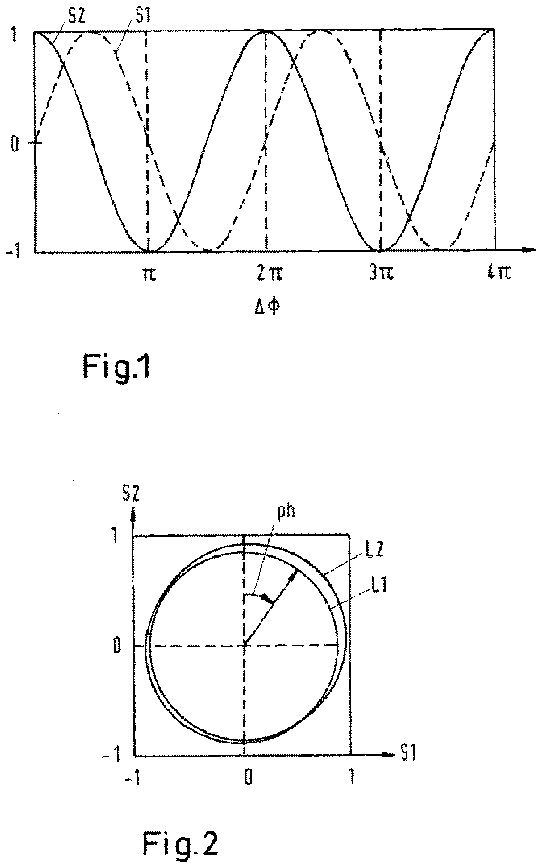

Hierbei werden im Idealfall sinusförmige, normierte, um Null zentrierte und 90° gegeneinander verschobene Signale erzeugt, die ein so genanntes Quadratursignalpaar bilden. Bildet ein Amplitudenwert eines ersten Signals des Paares einen Abszissenwert (x-Wert) und ein korrespondierender Amplitudenwert eines weiteren Signals dieses Paares einen Ordinatenwert (y-Wert), so liegen die Quadratursignalpaarpunkte über eine Periodenlänge der Signale im Idealfall auf einer Kreisfigur, die auch als Lissajous-Figur bekannt und in Fig. 2 dargestellt ist. Unter Anwendung der Arkustangens-Funktion kann dann ein periodenspezifischer Phasenwert ph wie folgt bestimmt werden $ph = arctan \left(y/x\right)$

Der periodenspezifische Phasenwert nimmt Werte aus einem Bereich von 0° bis 360° bzw. von 0 bis 2π an. Ein akkumulierter und periodenunspezifischer Phasenwert PH kann wie folgt bestimmt werden: $PH = 2 π \times u + ph$ wobei u die Anzahl von bereits erfolgten vollständigen Periodendurchläufen repräsentiert.

Ein solcher Phasenwert ph, PH kann zu einem Positionswert korrespondieren, der dem Phasenwert zugeordnet ist. Auch kann eine Änderung des Phasenwerts ph, PH zu einer Änderung des Positionswerts korrespondieren. Entsprechende Zuordnungen können z.B. über eine Kalibrierung bestimmt werden. Beispielsweise kann sein, wobei Delta_s eine Positionsänderung und Delta_PH / Delta_ph eine Phasenwertänderung bezeichnet. Der Proportionalitätsfaktor k kann von verschiedenen Größen abhängig sein, z.B. von einer Wellenlänge des verwendeten Laserlichts oder der Periodizität eines verwendeten optischen Gitters.

Problematisch bei diesem Verfahren ist, dass die Lissajous-Figur nicht immer ideal kreisförmig ist. Dann kann der Phasenwert ph, PH nicht mehr mit Hilfe des Arkustangens bestimmt werden bzw. wird die Genauigkeit einer solchen Bestimmung reduziert. Insbesondere können in einem solchen Fall periodische Messfehler entstehen. Bei interferometrischen Sensoren können die Fehler unter ungünstigen Umständen im Bereich größer als 10 nm sein, was insbesondere für Messungen im Halbleiterbereich zu ungenau sein kann.

Die Ursachen für eine nicht-kreisförmige Lissajous-Figur sind vielfältig und umfassen unter anderem schlecht abgeglichene Detektoren, Mehrfachreflektionen in einer Messkavität oder auch Crosstalks zwischen den Messkanälen.

Für den in der Praxis relevanten Spezialfall einer ellipsenförmigen Lissajous-Figur wie zum Beispiel in der DE 11 2015 001715 T5 existiert eine Vielzahl von Korrekturansätzen, die bildlich gesprochen die Ellipse in einen Kreis wandeln bzw. transformieren. Die Ansätze sind in der Regel Varianten oder Erweiterungen eines in dem Dokument "P. Heydemann, Determination and correction of quadrature fringe measurement errors in interferometers, Applied optics, 20 (19), 3382 (1981)" beschriebenen Verfahrens. Bei irregulär und insbesondere nicht ellipsenförmig geformten Lissajous-Figuren versagen diese Verfahren jedoch. Solche irregulär geformten Lissajous-Figuren treten z.B. auf, wenn als Messkavität ein Fabry-Perot Interferometer verwendet wird und dadurch Vielfach-Reflektionen im Messarm entstehen oder wenn das Quadratursignalpaar über eine Modulation der Laserwellenlänge mittels Strom erzeugt wird, wodurch es zu einer unerwünschten aber prinzipbedingten Intensitätsmodulation kommen kann.

Es stellt sich daher das technische Problem, ein Verfahren und eine Vorrichtung zur Bestimmung mindestens eines Korrekturwerts für einen zu korrigierenden Ist-Phasenwert sowie zur Bestimmung eines resultierenden Phasenwerts zu schaffen, die eine genaue Bestimmung des resultierenden Phasenwerts ermöglichen. Dies soll insbesondere in dem Fall möglich sein, dass Messwerte (Amplituden) eines Quadratursignalpaars eine irreguläre Lissajous-Figur bilden, also auf einer weder kreis- noch ellipsenförmigen Linie angeordnet sind.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Bestimmung mindestens eines Korrekturwerts für einen zu korrigierenden Ist-Phasenwert. Dieser Ist-Phasenwert kann - wie einleitend erläutert - eine Positionsinformation kodieren oder repräsentieren. Insbesondere können Veränderungen des Ist-Phasenwerts eine Positionsänderung repräsentieren oder kodieren. So kann in Abhängigkeit einer Änderung des Phasenwerts eine Bewegungsinformation bestimmt werden, wobei diese Informationen über eine Bewegungsrichtung sowie einen zurückgelegten Weg/Winkel umfassen kann. Der Ist-Phasenwert ist wie eingangs erläutert aus einem Quadratursignalpaar bestimmbar bzw. wird aus dem Quadratursignalpaar bestimmt. Dieses Quadratursignalpaar umfasst ein erstes Signal und ein weiteres Signal. Zumindest eines dieser Signale kann ein durch einen Sensor erfasstes bzw. gemessenes Signal sein. Es ist auch vorstellbar, dass beide Signale derart gemessene Signale sind. Es ist jedoch auch vorstellbar, dass zumindest eines der Signale in Abhängigkeit einer gemessenen Größe, die von dem Signal verschieden ist, rechnerisch bestimmt wird. Idealerweise ist das erste Signal proportional zu einer Sinusfunktion und das weitere Signal proportional zu einer Kosinusfunktion. Bekannte Technologien, um derartige Quadratursignalpaare bereitzustellen, können z.B. die Erzeugung von phasenverschobenen Signalen unter Verwendung von Polarisationsfreiheitsgraden oder eine sinusförmige Wellenlängenmodulation umfassen. Idealerweise sind also das erste und das weitere Signal sinusförmige, normierte, um Null zentrierte und 90° gegeneinander verschobene Signale.

Das vorgeschlagene Verfahren umfasst die folgenden Schritte:
In einem ersten Bestimmungsschritt werden stützstellenspezifische Ist-Phasenwerte für mindestens zwei Stützstellen bestimmt, wobei die Stützstellen jeweils um ein Vielfaches einer Periodenlänge der Signale beabstandet voneinander angeordnet sind. Die Signale weisen die gleiche Periodenlänge auf. Das Vielfache beträgt vorzugsweise 1, kann aber auch größer als 1 sein. Mit anderen Worten wird für mehrere Stützstellen ein Ist-Phasenwert bestimmt. Diese stützstellenspezifischen Ist-Phasenwerte können gespeichert werden, insbesondere in einer Speichereinrichtung einer Vorrichtung zur Bestimmung des mindestens einen Korrekturwerts. Es ist hierbei vorstellbar, die Ist-Phasenwerte in einer der jeweiligen Stützstelle zugeordneten Art und Weise zu speichern.

Beispielsweise kann eine Relativbewegung zwischen einer Einrichtung zur Erzeugung bzw. Bereitstellung des Quadratursignalpaars und einem Target durchgeführt werden, wobei während dieser Relativbewegung Quadratursignalpaare bereitgestellt werden. Wie vorhergehend erläutert, kann der aus dem Quadratursignalpaar bestimmbare Ist-Phasenwert bzw. seine Änderung Bewegungsinformationen über die durchgeführte Relativbewegung kodieren bzw. repräsentieren.

Somit können während der Relativbewegung Ist-Phasenwerte bestimmt werden. Diesen Ist-Phasenwerten kann eine Zeitinformation zugeordnet sein, welche den Zeitpunkt der Erzeugung repräsentiert, z.B. ein Zeitstempel. Es ist möglich, die Ist-Phasenwerte verschieden zu gewichten, z.B. abhängig von einem zeitlichen Abstand zum vorhergehenden und/oder nachfolgenden Ist-Phasenwert. Bevorzugt werden die Ist-Phasenwerte mit einer konstanten Abtastrate erzeugt und/oder gleich gewichtet. Weiter können die Ist-Phasenwerte über zumindest eine vorbestimmte Anzahl von Perioden, die z.B. kleiner als oder größer als 10 sein kann, erzeugt werden. Aus der Menge der derart bestimmten Ist-Phasenwerte können dann die die stützstellenspezifischen Ist-Phasenwerte bestimmt werden. Vorzugsweise wird die Stützstelle als ein Punkt gewählt, zu dem die eingangs erläuterte Arkustangens-Funktion 0 beträgt oder einen Maximalwert oder einen Minimalwert aufweist. Dies ermöglicht in vorteilhafter Weise eine einfache und zuverlässige Bestimmung der Stützstelle.

In einem zweiten Bestimmungsschritt wird ein geschätzter Verlauf einer Phasenwertetrajektorie in Abhängigkeit der stützstellenspezifischen Ist-Phasenwerte bestimmt. Der geschätzte Verlauf kann auch als Schätz-Trajektorie bezeichnet werden und kann insbesondere einen zeitlichen Verlauf der Ist-Phasenwerte während der erläuterten Relativbewegung repräsentieren oder annähern. Der geschätzte Verlauf ermöglicht die Bestimmung von Schätz-Phasenwerten, die nicht an den vorhergehend erläuterten Stützstellen angeordnet sind. Der geschätzte Verlauf kann insbesondere ein Verlauf sein, der Abweichungen der stützstellenspezifischen Ist-Phasenwerte von den korrespondierenden Schätz-Phasenwerten des geschätzten Verlaufs minimiert.

In einem dritten Bestimmungsschritt wird eine Soll-Häufigkeitsverteilung von Phasenwerten in Abhängigkeit des geschätzten Verlaufs bestimmt. Vorzugsweise ist diese Soll-Häufigkeitsverteilung normiert, insbesondere auf die Anzahl an Phasenwerten, die über eine oder mehrere Periodenlänge(n) bestimmt wurden. Dies kann einer Wahrscheinlichkeitsdichte entsprechen und eine relative Soll-Häufigkeitsverteilung sein. Die Soll-Häufigkeitsverteilung kann also insbesondere die Häufigkeitsverteilung der über eine oder mehrere Periodenlänge(n) der Signale bestimmten Schätz-Phasenwerte sein. Insbesondere kann die Soll-Häufigkeitsverteilung als Histogramm bestimmt werden, welches in Abhängigkeit von Schätz-Phasenwerten erzeugt wird, die mit einer vorbestimmten Abtastrate aus dem geschätzten Verlauf erzeugt/bestimmt wurden. Es ist aber auch vorstellbar, die Soll-Häufigkeitsverteilung durch Anwenden eines Verfahrens zur Kerndichteschätzung oder durch Verarbeiten des geschätzten Verlaufs mit einem geeignet trainierten maschinell erlernten Modell zu bestimmen. Die derart bestimmte Soll-Häufigkeitsverteilung kann auch als theoretisch erwartete Verteilung von Phasenwerten bezeichnet werden.

In einem vierten Bestimmungsschritt wird eine Ist-Häufigkeitsverteilung von Phasenwerten bestimmt. Vorzugsweise ist diese Ist-Häufigkeitsverteilung ebenfalls normiert, insbesondere auf die Anzahl an Phasenwerten, die über eine oder mehrere Periodenlänge(n) bestimmt wurden. Dies kann ebenfalls einer Wahrscheinlichkeitsdichte entsprechen und eine relative Ist-Häufigkeitsverteilung sein. Diese Ist-Häufigkeitsverteilung kann auch als experimentell beobachtete Häufigkeitsverteilung bezeichnet werden und wird nicht in Abhängigkeit des geschätzten Verlaufs, sondern in Abhängigkeit von Ist-Phasenwerten bestimmt, die insbesondere von einer entsprechenden Einrichtung bereitgestellt wurden. Wie vorhergehend erläutert können z.B. Ist-Phasenwerte mit einer vorbestimmten Abtastrate während einer vorbestimmten Zeitdauer bestimmt werden, wobei die Ist-Häufigkeitsverteilung dann als Histogramm in Abhängigkeit dieser Ist-Phasenwerte bestimmt wird. Die Ist-Häufigkeitsverteilung kann insbesondere die Häufigkeitsverteilung der über eine oder mehrere Periodenlänge(n) der Signale bestimmten Ist-Phasenwerte sein. Wie vorhergehend bezüglich der theoretisch erwarteten Häufigkeitsverteilung können jedoch auch andere Verfahren zur Bestimmung der Ist-Häufigkeitsverteilung angewendet werden. Vorzugsweise ist die Anzahl der für die Bestimmung der Soll- und Ist-Häufigkeitsverteilung berücksichtigten Periodenlängen gleich, sie können jedoch auch verschieden sein. Vorzugsweise ist auch die Abtastrate zur Bestimmung der Ist- und Schätz-Phasenwerte für die Bestimmung der Soll- und Ist-Häufigkeitsverteilung gleich, sie können jedoch auch verschieden sein.

In einem fünften Bestimmungsschritt wird für mindestens einen ausgewählten Ist-Phasenwert ein Soll-Phasenwert derart bestimmt, dass die auf Basis der Verteilungen bestimmten kumulierten phasenwertspezifischen Häufigkeiten gleich sind. Der Soll-Phasenwert kann ein Phasenwert des geschätzten Verlaufs sein. Zur Bestimmung der ist- bzw. soll-phasenwertspezifischen kumulierten Häufigkeiten können insbesondere die durch die entsprechende Häufigkeitsverteilung festgelegten Häufigkeiten, die verschiedenen Ist- bzw- Schätz-Phasenwerten zugeordnet sind, ausgehend von einem Phasenwert von Null bis zum Ist- bzw. Schätz-Phasenwert kumuliert werden. Dies kann beispielsweise durch Aufsummieren der durch ein Histogramm festgelegten Häufigkeitswerte erfolgen.

Hierbei wird der Soll-Phasenwert derart gewählt, dass die soll-phasenwertspezifische kumulierte Häufigkeit gleich der ist-phasenwertspezifischen kumulierten Häufigkeit ist. Dies kann mathematisch wie folgt ausgedrückt werden: ${\int }_{0}^{{ϕ}_{true}} ρ \left(ϕ′\right) dϕ ′ = {\int }_{0}^{{ϕ}_{NL}} {ρ}_{NL} \left(ϕ′\right) dϕ ′$ wobei *ϕₜᵣᵤₑ* den Soll-Phasenwert und *ϕ_{NL}* den Ist-Phasenwert bezeichnet. Die Variable *ρ_{NL}* bezeichnet die (normierte) Ist-Häufigkeitsverteilung und die Variable *ρ* die (normierte) Soll-Häufigkeitsverteilung. Unter Verwendung der Abkürzungen ${P}_{NL} \left({ϕ}_{NL}\right) : = {\int }_{0}^{{ϕ}_{NL}} {ρ}_{NL} \left(ϕ′\right) dϕ ′$ und $P \left({ϕ}_{true}\right) : = {\int }_{0}^{{ϕ}_{true}} ρ \left(ϕ′\right) dϕ ′$ lässt sich Formel 1 unter Ausnutzung der strengen Monotonität von P nach dem Soll-Phasenwert auflösen: ${ϕ}_{true} = {P}^{- 1} \left({P}_{NL}\left({ϕ}_{NL}\right)\right)$

Dann wird als ist-phasenwertspezifischer Korrekturwert die Differenz zwischen dem Soll- und dem Ist-Phasenwert bestimmt. Mit anderen Worten wird also ein ist-phasenwertspezifischer Korrekturwert bestimmt. Weiter kann der ist-phasenwertspezifische Korrekturwert wie vorhergehend erläutert gespeichert werden.

Weiter wird der Korrekturwert für den zu korrigierenden Ist-Phasenwert in Abhängigkeit dieses ist-phasenwertspezifischen Korrekturwerts bestimmt. Es können hierbei zwei Szenarien unterschieden werden. Ist der zu korrigierenden Ist-Phasenwert der ausgewählte Ist-Phasenwert oder weicht er weniger als ein vorbestimmtes Maß von diesem ab, so kann der Korrekturwert dieser ist-phasenwertspezifische Korrekturwert sein. Ist aber der zu korrigierenden Ist-Phasenwert von dem ausgewählten Ist-Phasenwert verschieden, insbesondere mehr als ein vorbestimmtes Maß, so kann der Korrekturwert z.B. durch Interpolation in Abhängigkeit des ist-phasenwertspezifische Korrekturwerts bestimmt werden. Dies wird nachfolgend noch erläutert.

Das vorgeschlagene Verfahren ermöglicht in vorteilhafter Weise eine zeitlich schnelle und einfach zu implementierende Bestimmung eines Korrekturwerts für einen spezifischen Ist-Phasenwert. Insbesondere vorteilhaft ist, dass die derartige Bestimmung des Korrekturwerts keine Voraussetzungen für die Form der eingangs erläuterten Lissajous-Figur erfordert, wie beispielsweise eine Ellipsenform. Somit wird also in vorteilhafter Weise eine Fehlerkorrektur für ein breiteres Anwendungsspektrum ermöglicht. Ferner ergibt sich in vorteilhafter Weise, dass das vorgeschlagene Verfahren aufgrund seiner Einfachheit nur geringe Anforderungen an eine Hardware von Recheneinrichtungen zur Durchführung des Verfahrens stellt. Insbesondere kann das Verfahren auf einer integrierten Schaltung, wie z.B. einem FPGAimplementiert bzw. mit dieser integrierten Schaltung durchgeführt werden, wodurch sich insbesondere eine schnelle Durchführung ergibt.

Das vorgeschlagene Verfahren kann auch das Erzeugen bzw. das Bereitstellen und/oder das Empfangen der Signale von Quadratursignalpaaren umfassen, wobei die Ist-Phasenwerte aus den Signalwerten der Quadratursignalpaare bestimmt werden.

In einer weiteren Ausführungsform wird der geschätzte Verlauf mittels einer Interpolation bestimmt. Im Sinne dieser Erfindung kann eine Interpolation auch eine Extrapolation umfassen. Somit können also Schätz-Phasenwerte mittels einer Interpolation aus den stützstellenspezifischen Ist-Phasenwerten bestimmt werden. Dadurch wird in vorteilhafter Weise eine einfach implementierbare Bestimmung des geschätzten Verlaufs mit einer ausreichenden Genauigkeit ermöglicht.

Alternativ wird der geschätzte Verlauf mittels eines Kalman-Filters bestimmt. Hierbei können die stützstellenspezifischen Ist-Phasenwerte sogenannte Beobachtungsgrößen sein. Ein Schätz-Phasenwert kann dann insbesondere als Systemzustandsgröße, insbesondere vor Anwendung einer neuen Beobachtung, bestimmt werden. Hierdurch ergibt sich in vorteilhafter Weise eine genaue Bestimmung des geschätzten Verlaufs.

Alternativ wird der geschätzte Verlauf mittels eines maschinell erlernten Modells bestimmt. Hierbei kann die Menge von stützstellenspezifischen Ist-Phasenwerten ein Eingangsdatenpunkt für das maschinell erlernte Modell bilden, wobei der geschätzte Verlauf, also eine Menge von Schätz-Phasenwerten, einen Ausgangsdatenpunkt des maschinell erlernten Modells bildet. Das maschinell erlernte Modell kann mit geeigneten Trainingsdatensätzen, die Trainings-Eingangsdatenpunkte und Trainings-Ausgangsdatenpunkte umfassen, trainiert werden, insbesondere in mehreren Trainingsschritten. Ein solcher Trainingsdatensatz kann erzeugt werden, indem ein Experte für eine als Trainings-Eingangsdatenpunkt verwendete Menge von stützstellenspezifischen Ist-Phasenwerten einen geschätzten Verlauf von Schätz-Phasenwerten als Trainings-Ausgangsdatenpunkt erzeugt bzw. vorgibt. Ist z.B. ein Soll-Trajektorienverlauf einer Relativbewegung vorbekannt, beispielsweise weil eine Kalibrierrelativbewegung durchgeführt wird, so können die Schätz-Phasenwerte in Abhängigkeit des Soll-Trajektorienverlaufs bestimmt werden. Dies kann auch als Annotation bezeichnet werden. In der Trainingsphase können Parameter, insbesondere Gewichte und/oder Verknüpfungen, des maschinell erlernten Modells derart angepasst werden, dass beim maschinell erlernten Modell eine Abweichung zwischen den vom maschinell erlernten Modell für die Trainings-Eingangsdatenpunkte erzeugten Ausgangsdatenpunkten möglichst wenig von den Trainings-Ausgangsdatenpunkten abweichen. Hierzu kann in jedem Trainingsschritt mindestens ein Parameter des maschinell erlernten Modells verändert werden. Ein maschinell erlerntes Modell (MLM) kann also ein durch ein Verfahren zum überwachten Lernen erzeugtes Modell sein. Somit kann es insbesondere ein neuronales Netz sein, insbesondere ein DL-Modell wie ein CNN (convolutional neural network), ein RNN (recurrent neural network), ein LSTM-Netzwerk (long short-term memory network) oder ein Modell der Transformer Familie (Transformer-Modell). Es ist aber auch vorstellbar, dass ein MLM durch ein Verfahren zum unüberwachten Lernen, zum semi-überwachten Lernen oder zum selbstüberwachten Lernen erzeugt wurde. Auch hierdurch ergibt sich in vorteilhafter Weise eine sehr genaue Bestimmung des geschätzten Verlaufs und resultierend eine genaue Bestimmung des Korrekturwerts.

Insbesondere können also mittels der Interpolation, des Kalman-Filters oder des maschinell erlernten Modells solche Schätz-Phasenwerte bestimmt werden, die zwischen den stützstellenspezifischen Ist-Phasenwerten, größer als ein maximaler stützstellenspezifischer Ist-Phasenwert oder kleiner als ein minimaler stützstellenspezifischer Ist-Phasenwert sind.

In einer weiteren Ausführungsform wird ein stützstellenspezifischer Ist-Phasenwert in Abhängigkeit von abtastpunktspezifischen Ist-Phasenwerten bestimmt, wobei die Abtastpunkte in einem vorbestimmten Wertebereich um die Stützstelle herum liegen. Zur Bestimmung der stützstellenspezifischen Ist-Phasenwerte kann - wie vorhergehend erläutert - während einer Relativbewegung mit einer vorbestimmten Abtastrate das Quadratursignalpaar und daraus der entsprechend aktuelle Ist-Phasenwert bereitgestellt werden. Entspricht keiner dieser Abtastpunkte der (vorbestimmten) Stützstelle, so kann der stützstellenspezifische Ist-Phasenwert in Abhängigkeit von abtastpunktspezifischen Phasenwerten bestimmt werden, die in einem vorbestimmten Wertebereich um die Stützstelle herum bestimmt wurden, beispielsweise als Mittelwert, insbesondere gewichteter Mittelwert. Hierdurch ergibt sich in vorteilhafter Weise eine genaue Bestimmung des stützstellenspezifischen Ist-Phasenwerts.

In einer weiteren Ausführungsform wird eine Qualität des geschätzten Verlaufs bestimmt, wobei das Bestimmen der Soll-Häufigkeitsverteilung von Phasenwerten in Abhängigkeit des geschätzten Verlaufs nur dann erfolgt, wenn mindestens ein vorbestimmtes Qualitätskriterium erfüllt ist. Insbesondere kann ein Qualitätsmaß in Abhängigkeit eines im zweiten Bestimmungsschritt bestimmten geschätzten Verlaufs bestimmt werden, wobei dieses Maß eine Qualität des geschätzten Verlaufs repräsentiert, beispielsweise eine Genauigkeit.

Eine Möglichkeit ist, auf Basis des geschätzten Verlaufs Schätz-Phasenwerte, insbesondere stützstellenspezifische Schätz-Phasenwerte, zu prognostizieren und diese dann mit den sich tatsächlich einstellenden Ist-Phasenwerten zu vergleichen. Prognostizierte Schätz-Phasenwerte können solche Phasenwerte sein, die sich während einer weiteren (zukünftigen) Fortsetzung der bereits erläuterten Relativbewegung gemäß dem geschätzten Verlauf einstellen. Insbesondere können solche prognostizierten Schätz-Phasenwerte solche Schätz-Phasenwerte sein, die sich in einem vorbestimmten Prognosezeitraum, beispielsweise einem periodenspezifischen Zeitraum einstellen. Der periodenspezifische Zeitraum kann hierbei ein Zeitraum sein, der benötigt wird, damit eine Periode der eingangs erläuterten Arkustangens-Funktion durchlaufen wird und periodenspezifische Phasenwerte erzeugt werden können.

Das Qualitätskriterium kann z.B. erfüllt sein, wenn ein Maß, welches die Abweichungen repräsentiert, kleiner als ein vorbestimmtes Maß ist. Entsprechend kann das vorbestimmte Qualitätskriterium nicht erfüllt sein, wenn dieses Maß gleich dem oder größer als das vorbestimmte Maß ist. Ist das Qualitätskriterium nicht erfüllt, so kann der geschätzte Verlauf erneut bestimmt werden. Hierzu können insbesondere der zweite Bestimmungsschritt, aber auch die Sequenz aus erstem und zweitem Bestimmungsschritt erneut durchgeführt werden.

Hierdurch ergibt sich in vorteilhafter Weise eine genaue Bestimmung des geschätzten Verlaufs und somit eine genaue Bestimmung des Korrekturwerts.

In einer weiteren Ausführungsform wird eine Abweichung zwischen dem geschätzten Verlauf, insbesondere einem prognostizierten geschätzteten Verlauf, und einem gemessenen Verlauf bestimmt, wobei das Qualitätskriterium erfüllt ist, wenn die Abweichung kleiner als ein vorbestimmtes Maß ist. Dies und entsprechende Vorteile wurden vorhergehend bereits erläutert.

In einer weiteren Ausführungsform wird das Quadratursignalpaar mittels eines interferometrischen Messsystems erzeugt. Das interferometrische Messsystem kann insbesondere ein Michelson-Interferometer oder Fabry-Pérot-Interferometer sein. Selbstverständlich können jedoch auch andere Arten von interferometrischen Messsystemen verwendet werden. Alternativ wird das Quadratursignalpaar mittels eines optischen Encoders erzeugt. Ein optischer Encoder kann z.B. eine Lichtquelle, einen oder mehrere Detektor(en) und ein optisches Gitter umfassen, wobei der/die Detektor(en) relativ zum optischen Gitter bewegt werden können und hierbei das erste und/oder das weitere Signal erzeugt und somit das Quadratursignal bereitgestellt werden kann. Z.B. kann Licht, welches von der Lichtquelle erzeugt wird, durch oder auf das optische Gitter, welches z.B. aus Glas oder Kunststoff ausgebildet sein kann, gestrahlt werden kann, wobei das optische Gitter derart ausgestaltet ist, dass in bestimmten Relativpositionen zwischen Gitter und Detektor(en) das von der Lichtquelle erzeugte Licht durch den Detektor erfasst werden kann und in anderen Relativpositionen blockiert wird (und nicht erfasst werden kann). **In** beiden Fällen ergibt sich in vorteilhafter Weise eine einfache und zuverlässige Erzeugung/Bereitstellung des Quadratursignalpaars. Somit kann in vorteilhafter Weise eine Genauigkeit der mit dem interferometrischen Messsystem oder dem optischen Encoder erzeugten Information, insbesondere Bewegungsinformation, erhöht werden.

In einer weiteren Ausführungsform wird der Korrekturwert in abrufbarer Weise und in einer dem insbesondere ausgewählten oder zu korrigierenden Ist-Phasenwert zugeordneten Weise gespeichert. Insbesondere kann der Korrekturwert dem eingangs erläuterten periodenspezifischen Phasenwert zugeordnet sein. Wird dieser (periodenspezifische) Ist-Phasenwert zu einem späteren Zeitpunkt (erneut) bestimmt, so kann der entsprechende Korrekturwert in einfacher Weise abgerufen und zur Korrektur des Ist-Phasenwerts verwendet werden. Hierdurch ergibt sich in vorteilhafter Weise eine zeitlich schnelle und einfach implementierbare Korrektur eines Ist-Phasenwerts bzw. eine einfach implementierbare und schnelle erneute Bestimmung des entsprechenden Korrekturwerts.

In einer weiteren Ausführungsform werden Korrekturwerte für jeden Ist-Phasenwert einer Phasenwertmenge von mindestens zwei ausgewählten Ist-Phasenwerten gemäß dem vorhergehend erläuterten fünften Bestimmungsschritt als Elemente einer Korrekturwertmenge bestimmt. Mit anderen Worten werden also ist-phasenwertspezifische Korrekturwerte als Elemente einer Korrekturwertmenge bestimmt. Weiter wird für einen zu korrigierenden Ist-Phasenwert, der nicht Element dieser Phasenwertmenge ist, ein Korrekturwert in Abhängigkeit der Elemente der Korrekturwertmenge, also der ist-phasenwertspezifischen Korrekturwerte, bestimmt. Insbesondere kann für einen Ist-Phasenwert, der nicht Element der Phasenwertmenge ist, der Korrekturwert mittels einer Interpolation oder mittels eines Kalman-Filters oder eines maschinell erlernten Modells bestimmt werden, wobei auf die vorhergehend diesbezüglich angeführten Erläuterungen verwiesen wird. Hierdurch kann in vorteilhafter Weise eine zeitlich schnelle Bestimmung eines Korrekturwerts für einen Ist-Phasenwert erfolgen, wobei dieser ausreichend genau und somit auch ein ausreichend genauer korrigierter Ist-Phasenwert bestimmt werden kann. Ist der zu korrigierenden Ist-Phasenwert ein Element dieser Phasenwertmenge, so kann als Korrekturwert der dem Ist-Phasenwert in der Phasenwertmenge zugeordnete Korrekturwert bestimmt werden. Dies Phasenwerte der Phasenwertmenge und die ihnen zugeordneten Korrekturwerte können in Form einer LUT (look up table) gespeichert werden.

In einer weiteren Ausführungsform wird der Korrekturwert, der in Abhängigkeit der Elemente der Korrekturwertmenge bestimmt wird, mittels einer Interpolation bestimmt. Dies und entsprechende Vorteile wurden vorhergehend bereits erläutert.

Das Verfahren eignet sich besonders, wenn zumindest eine der folgenden Annahmen zutrifft:
1. Messfehler sind periodisch, d.h. sie wiederholen sich bei jedem oder einer vorbestimmten Anzahl, die z.B. kleiner als oder gleich Zehn sein kann, Durchlauf einer Periode.
2. Eine Relativbewegung zwischen einer Einrichtung zur Bereitstellung des Quadratursignalpaares bzw. der Ist-Phasenwerte und einem Target kann durch eine Trajektorie beschrieben oder repräsentiert werden, die hinreichend glatt, insbesondere differenzierbar, ist.
3. Alle Ist-Phasenwerte verfügen über einen Zeitstempel bzw. werden zu bekannten Zeitpunkten aufgenommen. Die Gewichtung eines einzelnen Messpunktes ist hierbei proportional zum zeitlichen Abstand des vorhergehenden bzw. nachfolgenden Ist-Phasenwerts. Bevorzugt wird eine konstante Samplingrate mit gleicher Gewichtung aller Einzelmessungen verwendet.

Weiter vorgeschlagen wird ein Verfahren zur Bestimmung eines resultierenden Phasenwerts eines Quadratursignalpaares, welches ein erstes Signal und ein weiteres Signal umfasst. Der resultierende Phasenwert kann auch als korrigierter Phasenwert bezeichnet werden. Dieses Verfahren umfasst die Schritte:
a) Bestimmen eines zu korrigierenden Ist-Phasenwerts,
b) Bestimmen des resultierenden Phasenwerts durch Korrektur des zu korrigierenden Ist-Phasenwerts mit einem Korrekturwert, der mit einem Verfahren aus einer der in dieser Offenbarung erläuterten Ausführungsformen bestimmt wurde.

Hierdurch wird in vorteilhafter Weise eine sehr genaue Bestimmung eines resultierenden Phasenwerts ermöglicht, insbesondere auch für Fälle, in denen die eingangs erläuterte Lissajous-Figur keine spezielle Form aufweist.

Weiter vorgeschlagen wird eine Vorrichtung zur Bestimmung mindestens eines Korrekturwerts für einen zu korrigierenden Ist-Phasenwert, der aus einem Quadratursignal bestimmbar ist, welches ein erstes Signal und ein weiteres Signal umfasst. Die Vorrichtung umfasst mindestens eine erste Empfangsschnittstelle zum Empfang des Quadratursignalpaares, insbesondere also zum Empfang des ersten und/oder weiteren Signals sowie eine Auswerteeinrichtung. Die Auswerteeinrichtung kann als Recheneinrichtung ausgebildet sein. Eine Recheneinrichtung kann als Mikrocontroller oder integrierte Schaltung ausgebildet sein oder eine(n) solche(n) umfassen. Die Vorrichtung ist konfiguriert, ein Verfahren zur Bestimmung mindestens eines Korrekturwerts für einen Ist-Phasenwert gemäß einer der in dieser Offenbarung erläuterten Ausführungsformen durchzuführen. Hierdurch ergeben sich die vorhergehend bereits erläuterten Vorteile.

Weiter vorgeschlagen wird eine Vorrichtung zur Bestimmung mindestens eines resultierenden Phasenwerts eines Quadratursignalpaares, welches ein erstes Signal und mindestens ein weiteres Signal umfasst, wobei diese Vorrichtung eine Vorrichtung zur Bestimmung mindestens eines Korrekturwerts für einen Ist-Phasenwert gemäß einer der in dieser Offenbarung beschriebenen Ausführungsformen umfasst, wobei die Vorrichtung zur Bestimmung konfiguriert ist, ein Verfahren zur Bestimmung eines resultierenden Phasenwerts gemäß einer der in dieser Offenbarung beschriebenen Ausführungsformen durchzuführen. Insbesondere kann die Korrektur des Ist-Phasenwerts mit einem Korrekturwert mittels der Auswerteeinrichtung erfolgen.

Diese Vorrichtung kann Teil einer Wegmesseinrichtung sein. Die Verfahren und die Vorrichtungen können insbesondere für Anwendungen/in Anwendungen genutzt werden, die eine Genauigkeit einer Wegmessung kleiner als oder gleich einem Nanometer erfordern. Beispielsweise können solche Verfahren/Vorrichtungen in Positioniersystemen für lithografische Geräte genutzt werden bzw. Bestandteil solcher Positioniersysteme sein. Hierbei kann die Wegmessung erfolgen, um eine Positionsregelung bei der Bewegung von beweglichen Elementen solcher Geräte zu gewährleisten.

Weiter können die vorgeschlagenen Verfahren/Vorrichtungen zur Bereitstellung von korrigierten Messsignalen von interferometrischen Messsystemen oder optischen Encodern dienen bzw. Bestandteil solcher Systeme/Encoder sein.

Ebenfalls können die vorgeschlagenen Vorrichtungen/Verfahren zur Positionierung von Monochromatoren bei Synchrotrons dienen. Auch können sie zur Vibrationsmessung oder Massebestimmung, z.B. mittels einer Watt-Waage, verwendet werden.

Ermöglicht ein Positioniersystem eine Positionierung entlang von mehr als einer Achse, z.B. entlang von 3, insbesondere rechtwinklig zueinander orientierten Messachsen, so kann eine achsspezifische Weginformation/Positionsinformation in Abhängigkeit eines achsspezifisch bestimmten resultierenden Phasenwerts bestimmt werden. Hierbei kann für jede Achse eine achsspezifische Bestimmung von Korrekturwerten und somit eine achsspezifische Bestimmung von resultierenden Phasenwerten erfolgen. Dies ermöglicht in vorteilhafter Weise eine genaue achsspezifische Positionsmessung, da (periodische) Fehler für Messachsen im Allgemeinen unabhängig voneinander und ortsabhängig sind.

Die Erfindung wird anhand von Ausführungsbeispielen näher erläutert. Die Figuren zeigen:
- Fig. 1: ein beispielhafter Verlauf von Signalen eines Quadratursignalpaares,
- Fig. 2: eine beispielhafte Darstellung einer idealen und einer verzerrten Lissajous-Figur,
- Fig. 3: eine schematische Darstellung von stützstellenspezifischen Ist-Phasenwerten und einem geschätzten Verlauf,
- Fig. 4: eine schematische Darstellung einer Soll-Häufigkeitsverteilung und einer Ist-Häufigkeitsverteilung,
- Fig. 5: eine schematische Darstellung eines Korrekturwerts in einem Lissajous-Diagramm und
- Fig. 6: ein schematisches Blockschaltbild einer erfindungsgemäßen Vorrichtung.

Nachfolgend bezeichnen gleiche Bezugszeichen Elemente mit gleichen oder ähnlichen technischen Merkmalen.

Fig. 1 zeigt einen schematischen Verlauf eines ersten Signals S1 und eines weiteren Signals S2, die ein Quadratursignalpaar bilden und beispielsweise mittels eines interferometrischen Messsystems oder eines optischen Encoders während einer Relativbewegung zwischen einer Einrichtung zur Bereitstellung der Signale S1, S2 und einem Target (beide nicht dargestellt) erzeugt werden. Dargestellt ist der Verlauf der beiden Signale S1, S2 über verschiedene Abstände zwischen dem Target und z.B. einem oder mehreren Detektor(en) der Einrichtung zur Bereitstellung, die die entsprechenden Signale S1, S2 bereitstellt. Erkennbar ist, dass die Signale S1, S2 sinusförmig, normiert, um Null zentriert und 90° gegeneinander verschobene Signale S1, S2 sind. Ein abstandsspezifisches Quadratursignalpaar umfasst als ersten Wert einen abstandsspezifischen Amplitudenwert des ersten Signals S1 und als zweiten Wert einen abstandsspezifischen Amplitudenwert des zweiten Signals S2. Werden die Amplitudenwerte des ersten Signals S1 als Abszissenwerte und die (korrespondierenden) Amplitudenwerte des weiteren Signals S2 als Ordinatenwerte aufgetragen, so ergibt sich die in Fig. 2 dargestellte Lissajous-Figur, wobei eine ideale Lissajous-Figur L1 eine Kreisform aufweist, insbesondere wenn die Signale S1, S2 die gleichen Amplituden und keinen Offset aufweisen. In Fig. 2 dargestellt ist ebenfalls eine nicht ideale Lissajous-Figur L2, die entsteht, wenn insbesondere periodische Messfehler auftreten. In Fig. 2 weiter dargestellt ist ein periodenspezifischer Ist-Phasenwert ph, der sich, wie in Formel 1 angegeben, als Arkustangens des Verhältnis aus dem Amplitudenwert des weiteren Signals S2 zu dem Amplitudenwert des ersten Signals S1 bestimmt.

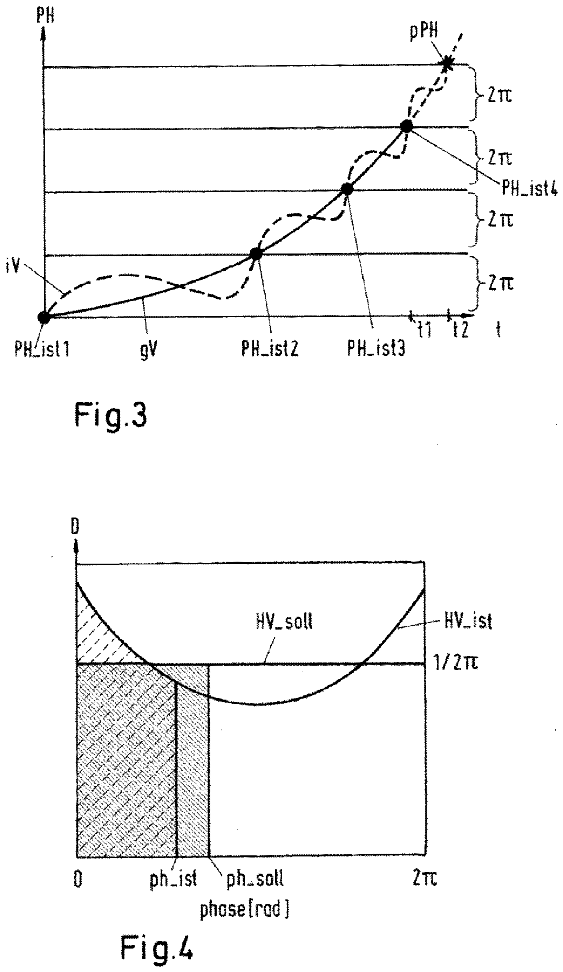

Fig. 3 zeigt einen schematischen Verlauf von stützstellenspezifischen Ist-Phasenwerten PH_ist1, PH_ist2, PH_ist3, PH_ist4. In Form einer gestrichelten Linie dargestellt ist ein Ist-Verlauf iV von Ist-Phasenwerten PH_ist, die mit einer vorbestimmten Abtastrate während einer Relativbewegung zwischen einer Einrichtung zur Bereitstellung der Quadratursignalpaare bzw. der Ist-Phasenwerte PH_ist bestimmt wurden.

Aus Fig. 3 ist ersichtlich, dass die stützstellenspezifischen Ist-Phasenwerte PH_ist1, ..., PH_ist4 ausgewählte Ist-Phasenwerte PH_ist sind, die während einer Relativbewegung über die Zeit erzeugt werden. Hierbei dargestellt ist, dass die stützstellenspezifischen Ist-Phasenwerte PH_ist1, ..., PH_ist4 um jeweils eine Periodenlänge 2π beabstandet voneinander angeordnet sind. Hierbei können die stützstellenspezifischen Ist-Phasenwerte PH_ist1, ..., PH_ist4 bis zu einem ersten Zeitpunkt t1 bestimmt und gespeichert werden.

Weiter ist durch eine durchgezogene Linie ein geschätzter Verlauf gV einer Phasenwertetrajektorie dargestellt, der in Abhängigkeit der stützstellenspezifischen Ist-Phasenwerte PH_ist1, ..., PH_ist4 bestimmt wurde, beispielsweise mittels eines Interpolationsverfahrens. So können beispielsweise abtastpunktspezifische Schätz-Phasenwerte dieses geschätzten Verlaufs durch Interpolation in Abhängigkeit der stützstellenspezifischen Phasenwerte PH_ist1, ..., PH_ist4 bestimmt werden. Insbesondere kann für jeden oder ausgewählte Abtastpunkt(e) des Ist-Verlaufs iV von Ist-Phasenwerten ein korrespondierender Schätz-Phasenwert des geschätzten Verlaufs bestimmt werden. Mit anderen Worten können in Abhängigkeit des geschätzten Verlaufs gV Schätz-Phasenwerte bestimmt werden, die sich mit einer vorbestimmten Abtastrate während einer vorbestimmten Zeitdauer entsprechend des geschätzten Verlaufs einstellen. Die vorbestimmte Zeitdauer kann insbesondere eine Zeitdauer sein, in der Abtastwerte über ein ganzzahliges Vielfaches einer Periodenlänge der Signale gemäß dem geschätzten Verlauf gV bestimmt werden. Dies ist jedoch nicht zwingend.

In Fig. 3 dargestellt ist auch ein prognostizierter stützstellenspezifischer Schätz-Phasenwert pPH, der ebenfalls in Abhängigkeit der bereits bestimmten stützstellenspezifischen Ist-Phasenwerte PH_ist1, ..., PH_ist4 bestimmt wird, beispielsweise mittels einer Extrapolation. Dieser prognostizierte Schätz-Phasenwert pPH dient zur Beurteilung einer Qualität des geschätzten Verlaufs gV. Insbesondere kann zu einem weiteren Zeitpunkt t2, der zeitlich nach dem ersten Zeitpunkt t1 liegt, der tatsächliche stützstellenspezifische Ist-Phasenwert bestimmt und mit dem prognostizierten stützstellenspezifischen Schätz-Phasenwert pPH verglichen werden. Weicht der Wert des tatsächlichen stützstellenspezifischen Ist-Phasenwerts weniger als ein vorbestimmtes Maß von dem Wert des prognostizierten stützstellenspezifischen Schätz-Phasenwerts pPH ab, so ist ein Qualitätskriterium erfüllt.

Fig. 4 zeigt eine schematische Darstellung von Häufigkeitsverteilungen, nämlich einer Soll-Häufigkeitsverteilung HV_soll von Phasenwerten des geschätzten Verlaufs gV (siehe Fig. 3), also eine Häufigkeitsverteilung von Schätz-Phasenwerten, über eine bestimmte Zeitdauer, insbesondere eine periodenspezifische Zeitdauer oder eine Zeitdauer, die der Summe mehrerer periodenspezifischer Zeitdauern entspricht. Ebenfalls zeigt Fig. 4 eine Ist-Häufigkeitsverteilung HV_ist von Ist-Phasenwerten während der gleichen Zeitdauer. Diese Häufigkeitsverteilungen HV_soll, HV_ist können beispielsweise bestimmt werden, indem ein Histogramm über alle abtastpunktspezifischen Werte des in Fig. 3 dargestellten geschätzten Verlaufs gV und des ebenfalls in Fig. 3 dargestellten Ist-Verlaufs iV während der angeführten Zeitdauer erstellt wird.

Fig. 4 zeigt außerdem einen periodenspezifischen Ist-Phasenwert ph_ist, wobei die für diesen periodenspezifischen Ist-Phasenwert ph_ist kumulierte ist-phasenwertspezifische Häufigkeit als gestrichelt schraffierte Fläche unter der Ist-Häufigkeitsverteilung von einem Ist-Phasenwert Null bis zum periodenspezifischen Ist-Phasenwert ph_ist visualisiert ist. Ebenfalls in Fig. 4 dargestellt ist ein periodenspezifischer Soll-Phasenwert ph_soll sowie entsprechende kumulierte soll-phasenwertspezifische Häufigkeit als durchgehend schraffierte Fläche unter der Soll-Häufigkeitsverteilung HV_soll von einem Ist-Phasenwert Null bis zum periodenspezifischen Soll-Phasenwert ph_soll. Hierbei ist der Soll-Phasenwert ph_soll derart bestimmt, dass die erläuterte Fläche unter der Soll-Häufigkeitsverteilung HV_soll gleich der erläuterten Fläche unter der Ist-Häufigkeitsverteilung HV_ist ist. Mit anderen Worten sind die kumulierten phasenwertspezifischen Häufigkeiten gleich. Als Korrekturwert kann dann die Differenz zwischen dem Soll-Phasenwert ph_soll und dem Ist-Phasenwert ph_ist bestimmt werden.

Es ist möglich, einen solchen Korrekturwert nur für ausgewählte Ist-Phasenwerte, insbesondere ausgewählte periodenspezifische Ist-Phasenwerte, zu bestimmen, wobei Korrekturwerte für weitere Ist-Phasenwerte dann in Abhängigkeit dieser Korrekturwerte bestimmt werden können. So ist es beispielsweise möglich, Korrekturwerte für jeden Ist-Phasenwert, insbesondere periodenspezifischen Ist-Phasenwert, als Element einer Korrekturwertmenge zu bestimmen, wobei für einen (weiteren) periodenspezifischen Ist-Phasenwert, der nicht Element der Phasenwertmenge ist, ein Korrekturwert in Abhängigkeit der Elemente der Korrekturwertmenge bestimmt wird, beispielsweise durch Interpolation.

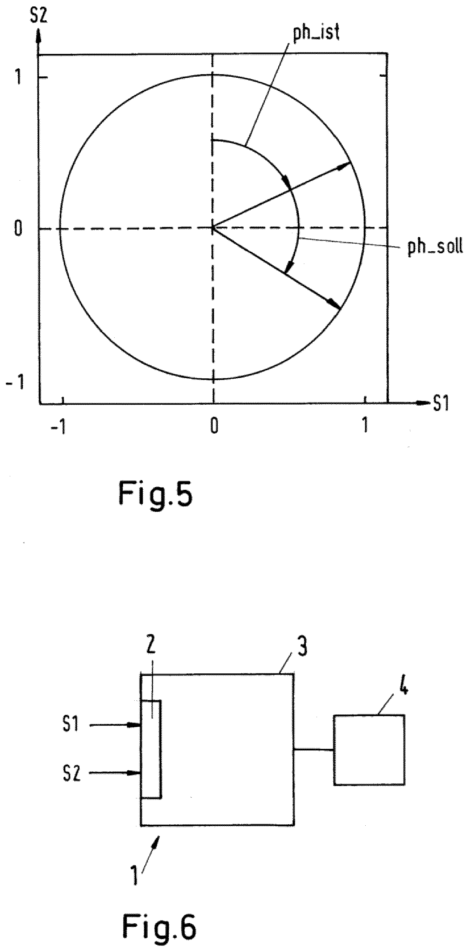

Fig. 5 zeigt die zu Fig. 4 korrespondierende Darstellung des periodenspezifischen Ist-Phasenwerts ph_ist und des periodenspezifischen Soll-Phasenwerts ph_soll in der Lissajous-Figur. Wird gemäß Formel 1 ein periodenspezifischer Ist-Phasenwert ph_ist bestimmt, beispielsweise weil zumindest eines der Signale S1, S2 im Vergleich zu einem Mittelwert fehlerbehaftet ist, so kann mit dem vorgeschlagenen Verfahren ein Soll-Phasenwert ph_soll bestimmt werden, der sich unter Annahme entsprechender Soll-Signalwerte ergibt.

Fig. 6 zeigt ein schematisches Blockschaltbild einer Vorrichtung 1 zur Bestimmung mindestens eines Korrekturwerts für einen Ist-Phasenwert ph_ist (siehe Fig. 4), der aus einem Quadratursignalpaar bestimmbar ist, welches ein erstes Signal S1 und ein weiteres Signal S2 umfasst. Die Vorrichtung 1 umfasst eine Empfangsschnittstelle 2 zum Empfang des Quadratursignalpaars, insbesondere der beiden Signale S1, S2. Weiter umfasst die Vorrichtung 1 eine Auswerteeinrichtung 3, wobei dargestellt ist, dass die Empfangsschnittstelle 2 Teil der Auswerteeinrichtung 3 ist. Mittels der Auswerteeinrichtung 3 kann der Ist-Phasenwert sowie der entsprechende Korrekturwert bestimmt werden. Ebenfalls kann mit der Auswerteeinrichtung 3 ein resultierender Phasenwert bestimmt werden, indem ein aus den Signalen S1, S2 bestimmter Ist-Phasenwert ph_ist mit dem Korrekturwert korrigiert wird.

In Fig. 6 ebenfalls dargestellt ist eine Speichereinrichtung 4, wobei diese Speichereinrichtung dazu dient, stützstellenspezifische Ist-Phasenwerte PH_ist1, ..., PH_ist4 sowie ist-phasenwertspezifische Korrekturwerte zu speichern. Hierdurch wird ermöglicht, dass die Auswerteeinrichtung 3 einen geschätzten Verlauf gV (siehe Fig. 3) in Abhängigkeit der gespeicherten stützstellenspezifischen Ist-Phasenwerte PH_ist1, ..., PH_ist4 bestimmen kann. Auch kann die Auswerteeinrichtung 3 Korrekturwerte abhängig von den ist-phasenwertspezifischen Korrekturwerten, die in der Speichereinrichtung 4 gespeichert sind, bestimmen.

### Bezugszeichenliste

- 1: Vorrichtung
- 2: Empfangsschnittstelle
- 3: Auswerteeinrichtung
- 4: Speichereinrichtung
- gV: geschätzter Verlauf
- iV: Ist-Verlauf
- HV_ist: Ist-Häufigkeitsverteilung
- HV_soll: Soll-Häufigkeitsverteilung
- L1: ideale Lissajous-Figur
- L2: nicht ideale Lissajous-Figur
- ph_ist: Ist-Phasenwert
- ph_soll: Soll-Phasenwert
- PH_ist1, ..., PH_ist4: Ist-Phasenwerte
- pPH: prognostizierter stützstellenspezifischer Schätz-Phasenwert
- S1: erstes Signal
- S2: weiteres Signal
- t1: erster Zeitpunkt
- t2: weiterer Zeitpunkt

## Patentansprüche

1. Verfahren zur Bestimmung mindestens eines Korrekturwerts für einen zu korrigierenden Ist-Phasenwert (ph_ist), der aus einem Quadratursignalpaar bestimmbar ist, welches ein erstes Signal (S1) und ein weiteres Signal (S2) umfasst, umfassend die Schritte:
a) Bestimmen von stützstellenspezifischen Ist-Phasenwerten (PH_ist1, ..., PH_ist4) für mindestens zwei Stützstellen, wobei die Stützstellen jeweils um ein ganzzahliges Vielfaches einer Periodenlänge der Signale (S1, S2) beabstandet voneinander angeordnet sind,
b) Bestimmen eines geschätzten Verlaufs (gV) einer Phasenwertetrajektorie in Abhängigkeit der stützstellenspezifischen Ist-Phasenwerte (PH_ist1, ..., PH_ist4),
c) Bestimmen einer Soll-Häufigkeitsverteilung (HV_soll) von Phasenwerten in Abhängigkeit des geschätzten Verlaufs (gV),
d) Bestimmen einer Ist-Häufigkeitsverteilung (HV_ist) von Ist-Phasenwerten,
e) wobei für mindestens einen ausgewählten Ist-Phasenwert (ph_ist) ein Soll-Phasenwert (ph_soll) derart bestimmt wird, dass die auf Basis der Verteilungen (HV_soll, HV_ist) bestimmten kumulierten phasenwertspezifischen Häufigkeiten gleich sind, wobei als ist-phasenwertspezifische Korrekturwert die Differenz zwischen dem Soll- und dem Ist-Phasenwert (ph_ist, ph_soll) bestimmt wird, wobei der Korrekturwert in Abhängigkeit dieses ist-phasenwertspezifischen Korrekturwerts bestimmt wird.

2. Verfahren nach Anspruch 1, **dadurch gekennzeichnet, dass** der geschätzte Verlauf (gV) mittels einer Interpolation oder mittels eines Kalman-Filters oder eines maschinell erlernten Modells bestimmt wird.

3. Verfahren nach einem der vorangegangen Ansprüche, **dadurch gekennzeichnet, dass** ein stützstellenspezifischer Ist-Phasenwert (PH_ist1, ..., PH_ist4) in Abhängigkeit von abtastpunktspezifischen Ist-Phasenwerten bestimmt wird, wobei die Abtastpunkte in einem vorbestimmten Wertebereich um die Stützstelle herum liegen.

4. Verfahren nach einem der vorangegangen Ansprüche, **dadurch gekennzeichnet, dass** eine Qualität des geschätzten Verlaufs (gV) bestimmt wird, wobei das Bestimmen der Soll-Häufigkeitsverteilung (HV_soll) von Phasenwerten in Abhängigkeit des geschätzten Verlaufs (gV) nur dann erfolgt, wenn mindestens ein vorbestimmtes Qualitätskriterium erfüllt ist.

5. Verfahren nach Anspruch 4, **dadurch gekennzeichnet, dass** eine Abweichung zwischen dem geschätzten Verlauf (gV) und einem gemessenen Verlauf (iV) bestimmt wird, wobei das Qualitätskriterium erfüllt ist, wenn die Abweichung kleiner als ein vorbestimmtes Maß ist.

6. Verfahren nach einem der vorangegangen Ansprüche, **dadurch gekennzeichnet, dass** das Quadratursignalpaar mittels eines interferometrischen Messsystems oder eines optischen Encoders erzeugt wird.

7. Verfahren nach einem der vorangegangen Ansprüche, **dadurch gekennzeichnet, dass** der Korrekturwert in abrufbarer Weise und dem Ist-Phasenwert zugeordneten Weise gespeichert wird.

8. Verfahren nach einem der vorangegangenen Ansprüche, **dadurch gekennzeichnet, dass** Korrekturwerte für jeden ausgewählten Ist-Phasenwert einer Phasenwertmenge von mindestens zwei Ist-Phasenwerte gemäß Schritt e) als Elemente einer Korrekturwertmenge bestimmt werden, wobei für einen zu korrigierenden Ist-Phasenwert, der nicht Element der Phasenwertemenge ist, ein Korrekturwert in Abhängigkeit der Elemente der Korrekturwertmenge bestimmt wird.

9. Verfahren nach Anspruch 8, **dadurch gekennzeichnet, dass** der Korrekturwert, der in Abhängigkeit der Elemente der Korrekturwertmenge bestimmt wird, mittels einer Interpolation bestimmt wird.

10. Verfahren zur Bestimmung eines resultierenden Phasenwerts eines Quadratursignalpaares, umfassend ein erstes Signal (S1) und ein weiteres Signal (S2) umfasst, umfassend die Schritte:
a) Bestimmen eines zu korrigierenden Ist-Phasenwerts (ph_ist),
b) Bestimmen des resultierenden Phasenwerts durch Korrektur des zu korrigierenden Ist-Phasenwerts (ph_ist) mit einem Korrekturwert, der mit einem Verfahren gemäß einem der Ansprüche 1 bis 9 bestimmt wurde.

11. Vorrichtung zur Bestimmung mindestens eines Korrekturwerts für einen zu korrigierenden Ist-Phasenwert (ph_ist), der aus einem Quadratursignalpaar bestimmbar ist, welches ein erstes Signal (S1) und ein weiteres Signal (S2) umfasst, wobei die Vorrichtung (1) mindestens eine Empfangsschnittstelle (2) zum Empfang des Quadratursignalpaares sowie eine Auswerteeinrichtung (3) umfasst, wobei die Vorrichtung (1) konfiguriert ist, ein Verfahren gemäß einem der Ansprüche 1 bis 9 durchzuführen.

12. Vorrichtung zur Bestimmung mindestens eines resultierenden Phasenwerts eines Quadratursignalpaares, welches ein erstes Signal (S1) und mindestens ein weiteres Signal (S2) umfasst, umfassend eine Vorrichtung (1) gemäß Anspruch 11, wobei die Vorrichtung konfiguriert ist, ein Verfahren gemäß Anspruch 10 durchzuführen.

## Claims

1. A method for determining at least one corrective value for an actual phase value (ph_ist) to be corrected, which is determinable from a quadrature signal pair which comprises a first signal (S1) and another signal (S2), comprising the steps:
a) Determining actual phase values (PH_ist1, ..., PH_ist4) specific to sampling points for at least two sampling points, wherein the sampling points are respectively arranged spaced apart from each other by an integer multiple of a period length of the signals (S1, S2),
b) Determining an estimated curve (gV) of a phase value trajectory based on the actual phase values (PH_ist1, ..., PH_ist4) specific to the sampling points,
c) Determining a target frequency distribution (HV_soll) of phase values based on the estimated curve (gV),
d) Determining an actual frequency distribution (HV_ist) of actual phase values,
e) wherein for at least one selected actual phase value (ph_ist), a target phase value (ph_soll) is determined in such a way that the cumulative frequencies specific to phase values, determined based on the distributions (HV_soll, HV_ist), are identical, wherein the difference between the target and the actual phase value (ph_ist, ph_soll) is determined as a corrective value specific to the actual phase value, wherein the corrective value is determined depending on this corrective value specific to the actual phase value.

2. The method according to claim 1, **characterized in that** the estimated curve (gV) is determined by means of an interpolation or by means of a Kalman filter or a machine learning model.

3. The method according to one of the preceding claims, **characterized in that** an actual phase value (PH_ist1, ..., PH_ist4) specific to the sampling points is determined depending on actual phase values specific to scanning points, wherein the scanning points lie in a predetermined value range around the sampling point.

4. The method according to one of the preceding claims, **characterized in that** a quality of the estimated curve (gV) is determined, wherein the determination of the target frequency distribution (HV_soll) of phase values depending on the estimated curve (gV) is only carried out if at least one predetermined quality criterion is satisfied.

5. The method according to claim 4, **characterized in that** a deviation between the estimated curve (gV) and a measured curve (iV) is determined, wherein the quality criterion is satisfied if the deviation is less than a predetermined amount.

6. The method according to one of the preceding claims, **characterized in that** the quadrature signal pair is generated by means of an interferometric measuring system or an optical encoder.

7. The method according to one of the preceding claims, **characterized in that** the corrective value is stored in a retrievable way and in a way assigned to the actual phase value.

8. The method according to one of the preceding claims, **characterized in that** corrective values for each selected actual phase value of a set of phase values of at least two actual phase values are determined according to step e) as elements of a set of corrective values, wherein a corrective value is determined, depending on the elements of the set of corrective values, for an actual phase value to be corrected which is not an element of the set of phase values.

9. The method according to claim 8, **characterized in that** the corrective value, which is determined depending on the elements of the set of corrective values, is determined by means of an interpolation.

10. A method for determining a resulting phase value of a quadrature signal pair which comprises a first signal (S1) and another signal (S2), comprising the steps:
a) Determining an actual phase value (ph_ist) to be corrected,
b) Determining the resulting phase value by correcting the actual phase value (ph_ist) to be corrected using a corrective value, which was determined using a method according to one of claims 1 to 9.

11. A device for determining at least one corrective value for an actual phase value (ph_ist) to be corrected, which is determinable from a quadrature signal pair which comprises a first signal (S1) and another signal (S2), wherein the device (1) comprises at least one reception interface (2) for receiving the quadrature signal pair and an evaluation device (3), wherein the device (1) is configured to carry out a method according to one of claims 1 to 9.

12. A device for determining at least one resulting phase value of a quadrature signal pair which comprises a first signal (S1) and another signal (S2), comprising a device (1) according to claim 11, wherein the device is configured to carry out a method according to claim 10.

## Revendications

1. Procédé de détermination d'au moins une valeur de correction pour une valeur de phase réelle (ph_ist) à corriger, qui peut être déterminée à partir d'une paire de signaux en quadrature comprenant un premier signal (S1) et un autre signal (S2),
comprenant les étapes suivantes:
a) déterminer des valeurs de phase réelles (PH_ist1, ..., PH_ist4) spécifiques à des points de discrétisation pour au moins deux points de discrétisation, les points de discrétisation étant respectivement espacés l'un de l'autre d'un multiple entier d'une longueur de période des signaux (S1, S2),
b) déterminer une courbe estimée (gV) d'une trajectoire de valeurs de phase en fonction des valeurs de phase réelles (PH_ist1, ..., PH_ist4) spécifiques aux points de discrétisation,
c) déterminer une distribution de fréquence de consigne (HV_soll) des valeurs de phase en fonction de la courbe estimée (gV),
d) déterminer une distribution de fréquences réelle (HV_ist) de valeurs de phase réelles,
e) une valeur de phase de consigne (ph_soll) étant déterminée pour au moins une valeur de phase réelle sélectionnée (ph_ist) de telle sorte que les fréquences cumulées spécifiques aux valeurs de phase, déterminées sur la base des distributions (HV_soll, HV_ist), soient identiques, la valeur de correction spécifique à la valeur de phase réelle étant la différence entre la valeur de phase de consigne et la valeur de phase réelle (ph_ist), HV_ist) sont identiques, la valeur de correction spécifique à la valeur de phase réelle étant définie comme la différence entre la valeur de phase de consigne et la valeur de phase réelle (ph_ist, ph_soll), la valeur de correction étant déterminée en fonction de cette valeur de correction spécifique à la valeur de phase réelle.

2. Procédé selon la revendication 1, **caractérisé en ce que** la courbe estimée (gV) est déterminée au moyen d'une interpolation, d'un filtre de Kalman ou d'un modèle issu de l'apprentissage automatique.

3. Procédé selon l'une des revendications précédentes, **caractérisé en ce qu'**une valeur de phase réelle (PH_ist1, ..., PH_ist4) spécifique à un point de discrétisation est déterminée
en fonction de valeurs de phase réelles spécifiques à des points d'échantillonnage, les points d'échantillonnage se situant dans un domaine de valeurs prédéterminé autour du point de discrétisation.

4. Procédé selon l'une des revendications précédentes, **caractérisé en ce qu'**une qualité de la courbe estimée (gV) est déterminée, dans lequel la détermination de la distribution de fréquence de consigne (HV_soll) des valeurs de phase en fonction de la courbe estimée (gV) n'est établie que si au moins un critère de qualité prédéfini est satisfait.

5. Procédé selon la revendication 4, **caractérisé en ce qu'**un écart entre la courbe estimée (gV) et une courbe mesurée (IV) est déterminé, le critère de qualité étant satisfait lorsque l'écart est inférieur à une valeur prédéfinie.

6. Procédé selon l'une des revendications précédentes, **caractérisé en ce que** la paire de signaux en quadrature est générée au moyen d'un système de mesure interférométrique ou d'un codeur optique.

7. Procédé selon l'une des revendications précédentes, **caractérisé en ce que** la valeur de correction est enregistrée de manière à pouvoir être consultée et associée à la valeur de phase réelle.

8. Procédé selon l'une des revendications précédentes, **caractérisé en ce que** des valeurs de correction sont déterminées pour chaque valeur de phase réelle sélectionnée d'un ensemble de valeurs de phase comprenant au moins deux valeurs de phase réelles, conformément à l'étape e), en tant qu'éléments d'un ensemble de valeurs de correction, une valeur de correction étant déterminée pour une valeur de phase réelle à corriger qui n'est pas un élément de l'ensemble de valeurs de phase, en fonction des éléments de l'ensemble de valeurs de correction.

9. Procédé selon la revendication 8, **caractérisé en ce que** la valeur de correction, qui est déterminée en fonction des éléments de l'ensemble de valeurs de correction, est déterminée au moyen d'une interpolation.

10. Procédé de détermination d'une valeur de phase résultante d'une paire de signaux en quadrature, comprenant un premier signal (S1) et un autre signal (S2), comprenant les étapes suivantes :
a) déterminer une valeur de phase réelle à corriger (ph_ist),
b) déterminer la valeur de phase résultante en corrigeant la valeur de phase réelle à corriger (ph_ist) à l'aide d'une valeur de correction qui a été déterminée à l'aide d'un procédé selon l'une des revendications 1 à 9.

11. Dispositif destiné à déterminer au moins une valeur de correction pour une valeur de phase réelle (ph_ist) à corriger, qui peut être déterminée à partir d'une paire de signaux en quadrature comprenant un premier signal (S1) et un autre signal (S2),
le dispositif (1) comprenant au moins une interface de réception (2) destinée à recevoirla paire de signaux en quadrature ainsi qu'un dispositif d'évaluation (3), ledispositif (1) étant configuré pour mettre en œuvre un procédé selon l'une des revendications 1 à 9.

12. Dispositif destiné à déterminer au moins une valeur de phase résultante d'une paire de signaux en quadrature, qui comprend un premier signal (S1) et au moins un autre signal (S2), comprenant un dispositif (1) selon la revendication 11, le dispositif étant configuré pour mettre en œuvre un procédé selon la revendication 10.
